Europäisches Patentamt

European Patent Office

Office européen des brevets

(19)

(11) Numéro de publication : **0 037 335**
**B1**

(12) **FASCICULE DE BREVET EUROPÉEN**

(45) Date de publication du fascicule du brevet :
**30.01.85**

(51) Int. Cl.⁴ : **C 03 C 17/36**

(21) Numéro de dépôt : **81400491.7**

(22) Date de dépôt : **27.03.81**

(54) **Vitrage à spectres de transmission et de réflexion sélectifs.**

(30) Priorité : **28.03.80 FR 8006973**

(43) Date de publication de la demande :
**07.10.81 Bulletin 81/40**

(45) Mention de la délivrance du brevet :
**30.01.85 Bulletin 85/05**

(84) Etats contractants désignés :
**BE DE GB IT LU NL SE**

(56) Documents cités :
**FR-A- 1 513 724**
**FR-A- 2 335 462**
**GB-A- 2 009 723**

(73) Titulaire : **SAINT-GOBAIN VITRAGE**
**Les Miroirs 18, avenue d'Alsace**
**F-92400 Courbevoie (FR)**

(72) Inventeur : **Cohen, Sabatino**
**1, rue Madeleine Crenon**
**F-92230 Sceaux (FR)**

(74) Mandataire : **Eudes, Marcel et al**
**Saint-Gobain Recherche 39 Quai Lucien Lefranc**
**F-93304 Aubervilliers Cedex (FR)**

Jouve, 18, rue St-Denis, 75001 Paris, France

**Description**

L'invention concerne un vitrage à spectres de transmission et de réflexion sélectifs.

On a déjà proposé, dans la technique, des vitrages semi-réfléchissants, qui, dans le spectre visible, ne transmettent qu'une fraction du rayonnement lumineux et en réfléchissent une autre partie.

Ces vitrages sont utilisés dans les immeubles modernes pour lutter en été contre un ensoleillement excessif.

Il existe de nombreux vitrages de ce type. On peut les réaliser, par exemple, en déposant sur un substrat transparent (verre ou autre) trois couches successives :

— la première, ou couche d'ancrage, déposée directement sur le substrat, est généralement formée d'un diélectrique ; elle peut être aussi constituée d'un alliage tel qu'un nickel-chrome ;

— la seconde, qui confère à l'ensemble les propriétés semi-réfléchissantes recherchées, est généralement constituée d'un métal précieux (or), semi-précieux (argent), ou même usuel (cuivre), ou divers alliages métalliques ;

— la troisième couche, ou couche superficielle, est généralement en un diélectrique ; elle a une double fonction : améliorer les qualités optiques de l'ensemble et protéger la couche semi-réfléchissante de l'atmosphère ambiante ; cette troisième couche est constituée par exemple de sulfure de zinc.

De tels vitrages peuvent être réalisés par des moyens connus, par exemple évaporation thermique sous vide, et ils sont d'un usage courant.

L'invention vise à proposer un vitrage dont les spectres de transmission ou de réflexion peuvent être maîtrisés aussi bien dans le domaine des longueurs d'ondes visibles, que dans celui de l'infrarouge. Plus particulièrement, l'invention a pour but d'offrir la possibilité de réaliser un vitrage dont la transparence aux radiations visibles soit excellente et dont la réflexion, dans l'infra-rouge thermique, soit aussi élevé que possible, afin de limiter les pertes d'énergie.

Un autre but de l'invention est de proposer un vitrage présentant une réflexion élevée des infra-rouges jusque dans le domaine du solaire, et qui soit susceptible d'être modifiée et réglée en jouant sur la composition et l'épaisseur des couches dont est revêtu le substrat transparent.

A cet effet, l'invention a pour objet un vitrage à spectres de transmission et de réflexion sélectifs, comprenant un substrat transparent revêtu d'au moins une couche mince .semi-réfléchissante d'un métal ou d'un alliage, elle-même revêtue d'une couche mince transparente constituée d'oxydes métalliques, ce vitrage étant caractérisé en ce que ladite couche d'oxydes métalliques est constituée d'un oxyde mixte de cadmium et d'étain, dans lequel le rapport atomique Cd/Sn est compris entre 0,2 et 10.

La demanderesse a, en effet, établi que des oxydes mixtes de cadmium et d'étain, ne présentant pas par eux-mêmes des propriétés intéressantes de réflexion dans l'infra-rouge thermique, permettent d'obtenir, en association avec des couches métalliques, des vitrages à spectres de transmission et de réflexion sélectifs.

Parmi les composés proposés par la technique antérieure pour constituer la couche de protection de la couche métallique semi-réfléchissante, l'ensemble desdites couches constituant un filtre interférentiel à réflexion sélective des radiations infra-rouges, les oxydes de cadmium, CdO, et d'étain, $SnO_2$, avaient déjà été cités pour eux-mêmes : le document FR-A-1 513 724 mentionne chacun de ces oxydes, dans une liste qui comporte onze autres composés métalliques, oxydes ou sulfures, utilisables pour constituer des couches minces transparentes diélectriques. Certains sont bien connus et couramment utilisés, tels que ZnS ou SiO, mais les exemples les plus nombreux donnés par ce document portent sur $Bi_2O_3$, aucune association ni combinaison de composés, telle les oxydes mixtes préconisés par l'invention, n'étant proposée. Les oxydes CdO et $SnO_2$, en tant que tels, sont utilisés chacun pour l'obtention de vitrages à réflexion grise, sans qu'il soit noté à leur égard d'avantages particuliers par rapport aux autres composés cités pour cette même application tels que $Bi_2O_3$, CdS, $CeO_2$, $Fe_2O_3$, PbO, $Sb_2O_3$, $ZrO_2$, etc.

D'autre part, le dépôt de stannates de cadmium $Cd_2SnO_4$ ou $CdSnO_3$ a été décrit par les documents FR-A-2 335 462 et GB-A-2 009 723, proposant des procédés faisant appel à la pyrolyse de solutions de sels de cadmium et d'étain, pour la fabrication de vitrages conducteurs de l'électricité et réfléchissant les infra-rouges, sans combinaison de couches d'autre nature avec les films de stannates de cadmium obtenus. Ces objectifs impliquent la mise en œuvre de dépôts de fortes épaisseurs, de l'ordre de la longueur d'onde des radiations dont la réflexion sélective est souhaitée, à savoir de 0,1 à 0,7 μm selon le document GB-A-2 009 723, épaisseurs totalement incompatibles avec la fonction de couche interférentielle jouée par les couches d'oxydes mixtes de cadmium et d'étain selon l'invention.

La demanderesse a constaté, avec surprise, qu'il est possible de réaliser les vitrages conformes à l'invention en faisant varier dans de larges proportions les teneurs en cadmium et étain de l'oxyde mixte utilisé et qu'en modifiant le rapport atomique Cd/Sn, il est possible de faire varier l'indice de réfraction des couches déposées sur le vitrage.

Dans le cadre de l'invention, il est cependant recommandé que le rapport atomique Cd/Sn de la couche d'oxyde mixte soit compris entre 0,2 et 10, des valeurs inférieures étant apparues pouvoir être préjudiciables aux performances de réflexion sélective de l'infra-rouge, et des valeurs supérieures néfastes pour la résistance chimique du dépôt.

En outre, il est apparu favorable à la reproductibilité des résultats, que les dépôts, réalisés selon l'invention, d'oxyde mixte de cadmium et d'étain soient effectués à l'aide de cibles dans lesquelles ces métaux sont présents dans un rapport atomique Cd/Sn compris entre 1 et 3.

La demanderesse a également établi qu'il est possible de diminuer dans des proportions notables l'épaisseur de la couche réfléchissante, ce qui présente un gain appréciable, lorsque l'on réalise cette couche en or ou en argent. En effet, sans altérer les propriétés réfléchissantes de ces métaux, il est possible, conformément à l'invention, de les déposer en une épaisseur inférieure à 0,01 $\mu$m, les valeurs préférées se situant entre 0,005 et 0,03 $\mu$m, alors que, dans la technique des vitrages semi-réfléchissants, on utilise habituellement des couches d'épaisseur très largement supérieure à 0,01 $\mu$m.

La couche superficielle d'oxyde mixte de cadmium et d'étain aura, quant à elle, une épaisseur comprise de préférence entre 0,01 et 0,06 $\mu$m.

La couche réfléchissante des vitrages conformes à l'invention pourra être déposée soit directement sur le substrat transparent, soit, de façon connue en soi, sur une couche d'ancrage. La demanderesse a toutefois établi que l'on peut utiliser avantageusement pour la couche d'ancrage un oxyde mixte de cadmium et d'étain, de préférence de nature identique à celui dont est constituée la couche superficielle. Il est ainsi possible de déposer la couche d'ancrage et la couche superficielle dans une même enceinte, en utilisant le même processus et le même appareillage. L'épaisseur de cette couche d'ancrage pourra être extrêmement faible (par exemple 0,001 $\mu$m), dans le cas de vitrages très transparents, ce qui n'est pas avantageux avec les métaux ou alliages généralement utilisés pour les couches d'ancrage. Elle pourra atteindre des épaisseurs plus importantes pour la réalisation de vitrages chauffants (par exemple 0,05 $\mu$m).

Les couches du vitrage conforme à l'invention, notamment celle ou celles d'oxyde mixte de cadmium et d'étain, peuvent être déposées par des procédés connus, notamment par évaporation thermique ou par pulvérisation cathodique, en diode continue, en radiofréquence ou à magnétron, le substrat et la source pouvant être immobiles ou en mouvement relatif.

Les exemples qui suivent illustrent l'invention. Ils n'ont naturellement aucun caractère limitatif.

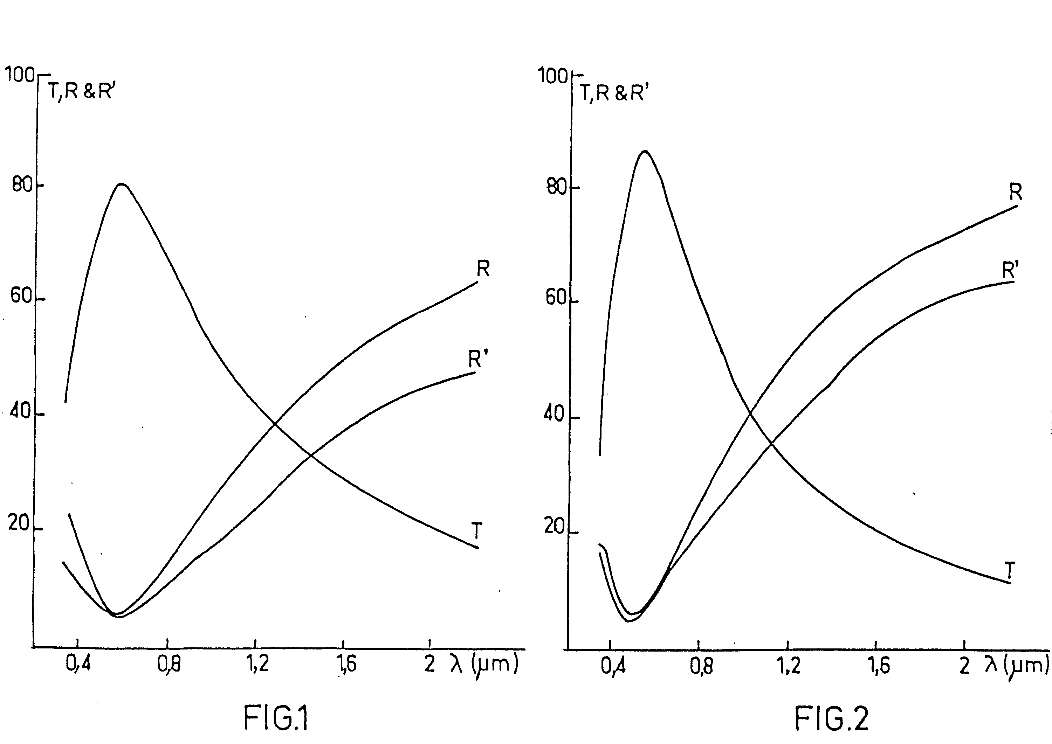

Dans ces exemples, on se référera aux dessins annexés. Sur ces dessins, les figures 1 à 10 représentent les spectres de transmission (T) et de réflexion (R du côté de la couche d'oxyde mixte de cadmium et d'étain et R' du côté du substrat), exprimés en % du rayonnement incident, en fonction de la longueur d'onde $\lambda$, exprimée en microns ($\mu$m), pour chacun des vitrages élaborés comme décrit respectivement dans les exemples de 1 à 10.

### Exemple 1

Dans une installation de pulvérisation cathodique comportant une cible circulaire d'or et une cible en alliage cadmium-étain (rapport atomique Cd/Sn = 2), on commence par déposer sur un substrat de type « float » d'épaisseur 4 mm, une première couche d'oxyde de cadmium et d'étain, par pulvérisation cathodique réactive, dans un mélange argon-oxygène à 20 % en volume d'oxygène, sous une pression de 40 millitorrs et avec une tension de − 930 V, pendant 30 secondes.

Cette première couche a une épaisseur d'à peine une dizaine d'Angströms (0,001 $\mu$m).

On dépose ensuite une couche d'or, sous atmosphère d'argon, avec une pression de 50 millitorrs et sous une tension de − 2 150 V. La durée de ce dépôt est de 8 secondes.

Cette seconde couche a une épaisseur d'environ 70 Å (0,007 $\mu$m).

On dépose enfin une troisième couche constituée d'oxyde mixte de cadmium et d'étain à l'aide du même alliage que pour la première couche, dans un mélange argon-oxygène à 20 % en volume d'oxygène, la pression étant de 40 millitorrs, sous une tension de − 2 050 V, appliquée pendant 125 secondes.

Cette troisième couche a une épaisseur d'environ 300 Å (0,03 $\mu$m).

La figure 1 représente le spectre T de transmission et les spectres de réflexion, respectivement R du côté de la couche et R' du côté du substrat, du vitrage résultant.

Le vitrage ainsi réalisé présente une bonne réflexion dans l'infra-rouge et une transparence élevée, qui dépasse 78 % pour le spectre visible.

### Exemple 2

On remplace la cible d'or de l'exemple 1 par une cible en argent. Sur un support constitué par du verre float d'une épaisseur de 4 mm, on dépose successivement :

— une couche d'oxyde mixte cadmium-étain d'une épaisseur de l'ordre de quelques dizaines d'Angströms dans un mélange argon (90 % en volume)-oxygène (10 %), à une pression de 40 millitorrs, la cible d'alliage cadmium-étain de l'exemple 1 étant portée à une tension de − 1 020 V, pendant 120 secondes ;

— une couche d'argent d'une épaisseur d'environ 100 Å (0,01 $\mu$m), sous atmosphère d'argon, sous une pression de 40 millitorrs, la cible d'argent étant portée à − 2 380 V, pendant 11 secondes ;

— enfin, à nouveau, une couche d'oxyde mixte cadmium-étain, d'une épaisseur d'environ 200 Å (0,02 $\mu$m), sous argon (90 %)-oxygène (10 %), à une pression de 40 millitorrs, ladite cible de cadmium-étain étant portée à − 3 300 V, pendant 24 secondes.

La figure 2 représente les spectres de transmission T et de réflexion R et R' du vitrage obtenu. Elle montre qu'un bon pouvoir réflecteur dans l'infra-rouge se trouve associé à une transmission lumineuse particulièrement élevée, puisqu'elle dépasse 84 %.

Exemple 3

Dans cet exemple, on utilise deux cathodes rectangulaires du type magnétron, pour réaliser des dépôts successifs sur un substrat de verre du type « float », d'une épaisseur de 4 mm, en mouvement par rapport aux cibles. L'une des cibles est constituée par un alliage cadmium-étain (rapport atomique Cd/Sn = 3) et l'autre par de l'argent. Un premier passage devant la cible d'alliage cadmium-étain permet d'obtenir une première couche d'oxyde cadmium-étain, dans un mélange argon (80 % en volume)-oxygène (20 %) à une pression de 6 millitorrs, sous une tension de cathode de − 250 V, avec une vitesse de défilement du substrat de 10 m/h.

La couche suivante est obtenue en faisant défiler le substrat devant la cible d'argent, sous atmosphère d'argon (pression 6 millitorrs) à une vitesse de 25 m/h, la tension de cathode étant de − 185 V.

La dernière couche est à nouveau constituée par un oxyde mixte de cadmium-étain, de même manière que pour le premier dépôt, en appliquant toutefois à la cathode une tension de − 285 V, la vitesse de défilement du verre étant de 22 m/h.

Les différentes couches ont une épaisseur comparable à celle des exemples précédents.

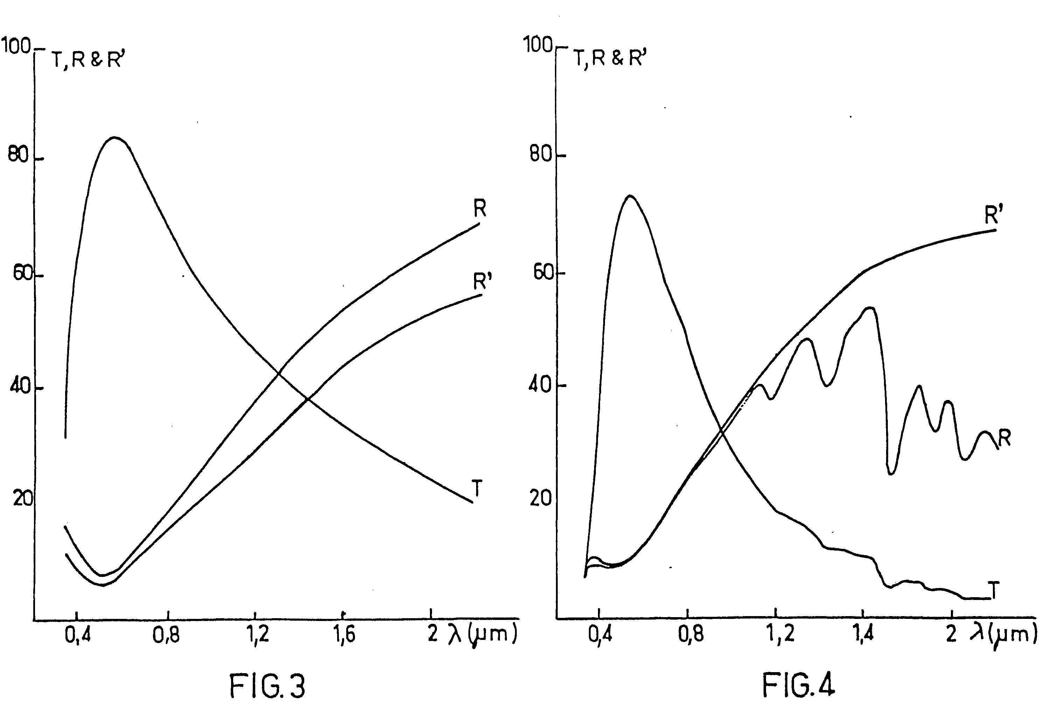

La figure 3 donne les caractéristiques du verre revêtu de ces trois couches. Les performances dans l'infra-rouge sont bonnes et la transmission lumineuse dépasse 83 %.

Exemple 4

On utilise la même configuration que dans l'exemple 2, en utilisant une cible d'alliage étain-cadmium avec Cd/Sn = 3.

Sur un support en verre du type « float », muni de deux bandes conductrices en laque d'argent, on dépose successivement :

— une couche d'oxyde mixte cadmium-étain d'une épaisseur de l'ordre de 500 Å (0,05 μm), dans un mélange argon (95 % en volume)-oxygène (5 %), sous une pression de 40 millitorrs, en appliquant une tension de − 2 320 V sur la cathode pendant 102 secondes ;

— une couche d'argent d'une épaisseur de l'ordre de 160 Å (0,016 μm) sous atmosphère d'argon, sous une pression de 40 millitorrs, avec une tension de cathode de − 2 380 V, pendant 18 secondes ;

— enfin, une couche d'oxyde mixte cadmium-étain semblable à la première couche, d'épaisseur identique à celle-ci.

Le support en verre ainsi revêtu est muni de contacts électriques avant d'être assemblé avec une deuxième feuille de verre identique à la première, à l'aide d'une feuille de polyvinylbutyral d'une épaisseur de 0,76 mm, pour réaliser un vitrage chauffant dont les couches métalliques sont disposées à l'intérieur.

La figure 4 illustre les caractéristiques optiques du vitrage obtenu. La résistance électrique des couches déposées est d'environ 5 ohms par carré.

Exemple 5

On utilise l'appareillage de l'exemple 1, en remplaçant la cible d'or par une cible en cuivre. On dépose sur un verre d'épaisseur 4 mm, une couche de cuivre sous atmosphère d'argon (7 millitorrs), en appliquant à la cathode une puissance de 200 W en radiofréquence pendant 10 secondes. La couche obtenue a une épaisseur de l'ordre de la centaine d'Angströms. On dépose ensuite une couche d'environ 300 Å (0,03 μm) d'oxyde mixte cadmium-étain à l'aide d'une cible d'un alliage de rapport atomique Cd/Sn = 2, dans un mélange d'argon (90 % en volume) et d'oxygène (10 %) sous une pression de 40 millitorrs, avec une tension de cathode de − 2 200 V, appliquée pendant 105 secondes.

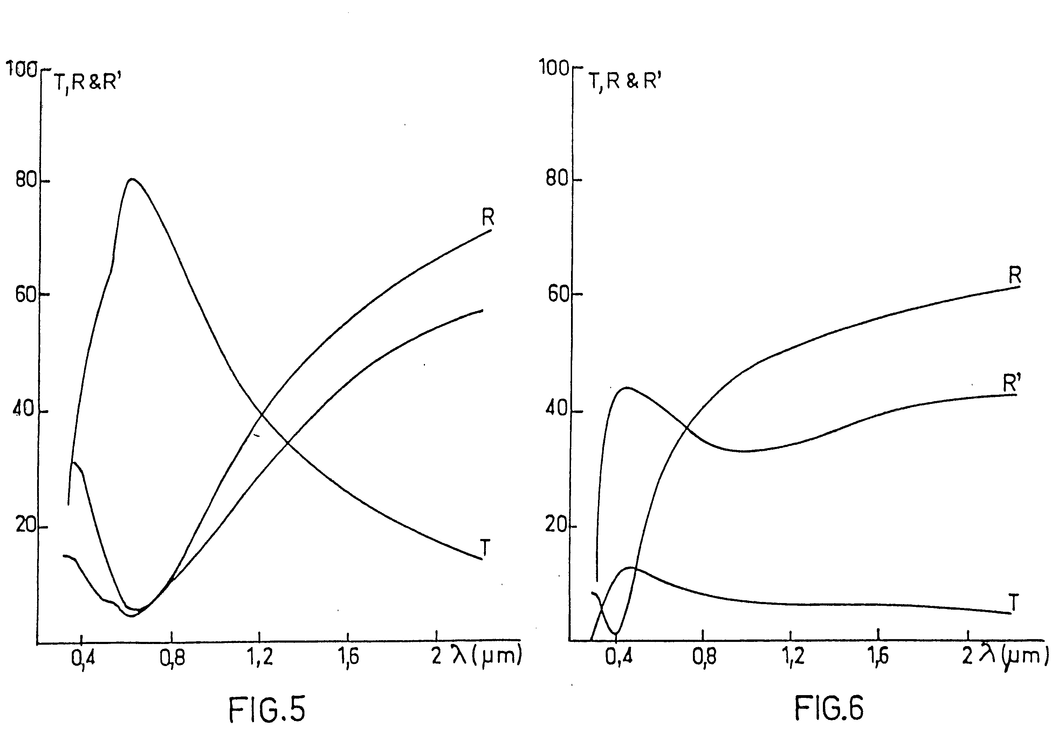

La figure 5 donne les caractéristiques optiques du vitrage obtenu. Ce vitrage associe une bonne transparence à des caractéristiques de protection contre un ensoleillement excessif.

Exemple 6

La cible de cuivre de l'appareillage de l'exemple 5 est remplacée par une cible en nickel-chrome de rapport pondéral Ni/Cr = 4, et on lui applique une puissance en radiofréquence de 200 W, dans une atmosphère d'argon, sous 6 millitorrs, pendant 125 secondes, pour obtenir une première couche sur un substrat en verre de 4 mm. Une deuxième couche est constituée par un oxyde mixte de cadmium et d'étain et est disposée à partir de la cible en alliage cadmium-étain de rapport atomique Cd/Sn = 2 dans une atmosphère constituée par un mélange d'argon (90 % en volume) oxygène (10 %) sous une pression de 40 millitorrs, avec une tension de − 1 850 V, appliquée sur la cathode pendant 193 secondes. Cette seconde couche a une épaisseur de l'ordre de 500 Å (0,05 μm).

La figure 6 représente les caractéristiques spectrophotométriques du verre revêtu de cette double couche. Ce type de vitrage est particulièrement bien adapté aux régions à fort ensoleillement.

Exemple 7

On réalise successivement, dans une première étape par évaporation thermique sous un vide de $2.10^{-5}$ Torrs (0,02 millitorr) le dépôt d'une couche de nickel-chrome de rapport Ni/Cr = 4, puis d'une couche d'or, sur un substrat en verre de 4 mm d'épaisseur. Le premier dépôt est arrêté lorsque la transmission à 550 nm est égale à 70 % de la transmission initiale du substrat. Le dépôt d'or, effectué à la suite, est conduit jusqu'à réduire la transmission à 30 %. En une seconde étape, une troisième couche d'oxyde mixte de cadmium et d'étain d'une épaisseur d'environ 500 Å (0,05 μm) est déposée par pulvérisation cathodique réactive dans une atmosphère d'argon (90 % en volume) et d'oxygène (10 %) à partir d'une cible en alliage cadmium-étain (Cd/Sn = 2), la tension de cathode étant de − 2 960 V et la durée du dépôt de 89 secondes, sous un vide de 40 millitorrs.

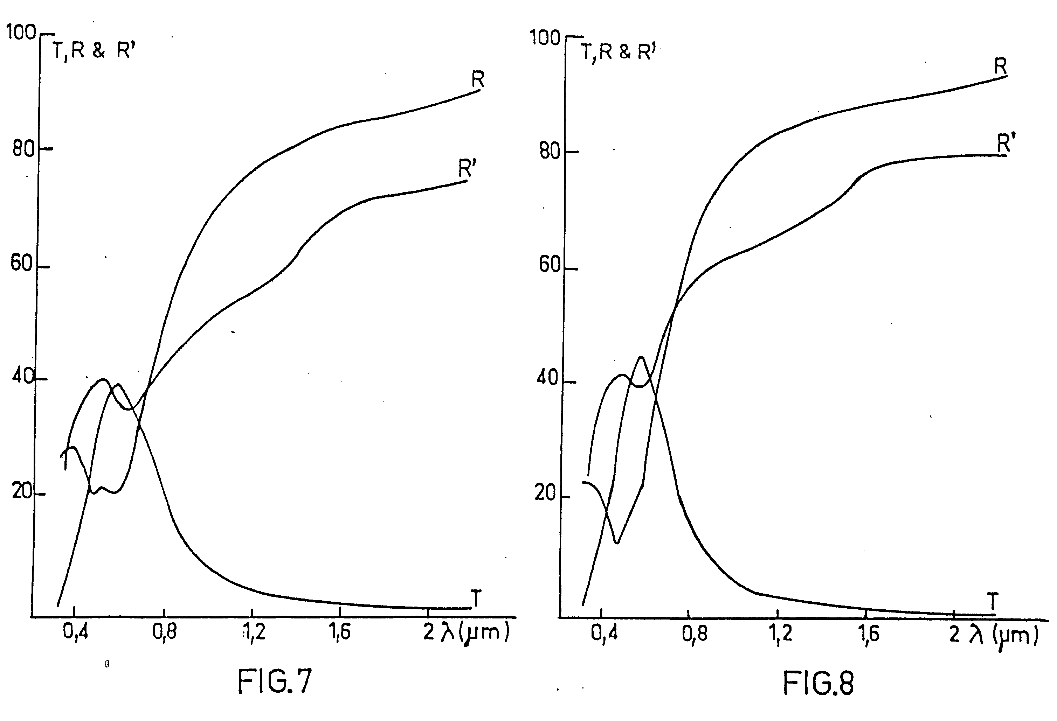

La figure 7 représente les caractéristiques spectrophotométriques du verre revêtu de. ces trois couches. Le vitrage se distingue par son apparence de miroir, quand on le regarde du côté opposé à la couche, et sa faible transmission énergétique dans le spectre solaire.

Exemple 8

On utilise à nouveau l'appareillage de l'exemple 1 en déposant sur un verre identique une première couche d'oxyde mixte de cadmium et d'étain également identique, puis une couche d'or d'une épaisseur de l'ordre de 300 Å (0,03 μm), en appliquant à la cathode correspondante une tension de − 2 050 V pendant 38 secondes, enfin une troisième couche d'oxyde mixte de cadmium et d'étain, en appliquant pendant 90 secondes une tension de − 2 700 V à la cible en alliage cadmium-étain. L'épaisseur de la couche est de l'ordre de 500 Å (0,05 μm).

La figure 8 illustre les caractéristiques spectrophotométriques du verre revêtu de cette triple couche. Par comparaison avec les spectres de la figure 7, on remarque que, malgré la différence de structure des couches, ce vitrage pourra avoir des domaines d'utilisation assez voisins de l'exemple précédent.

Exemple 9

On renouvelle le processus de l'exemple 7, mais dans des conditions telles que les niveaux de transmission après les dépôts de nickel-chrome et d'or sont respectivement 80 et 47 %. La troisième couche, faite d'oxyde mixte cadmium-étain, est obtenue en appliquant à la cible d'alliage cadmium-étain une tension de − 3 040 V pendant 75 secondes, sous un vide de 40 millitorrs.

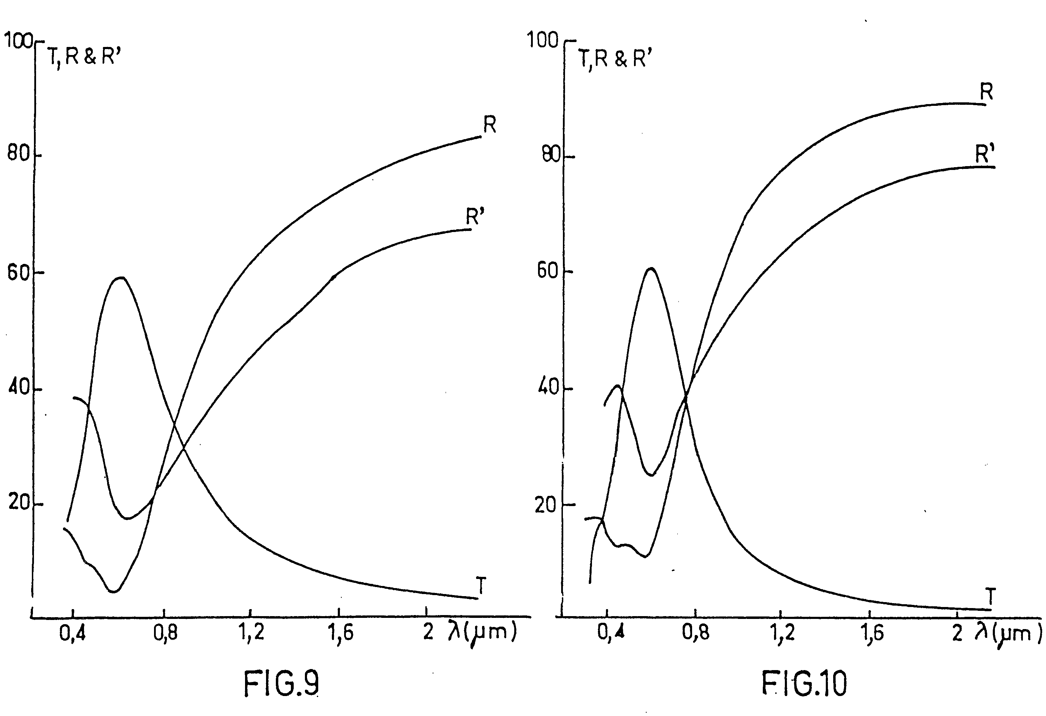

Les caractéristiques spectrophotométriques apparaissent sur la figure 9. Ces vitrages de couleur bleue par réflexion constituent un bon compromis entre la transparence et la protection contre un ensoleillement excessif.

Exemple 10

On renouvelle l'essai de l'exemple 1, en faisant varier les tensions d'alimentation et les durées de dépôt. Pour la première couche, la tension appliquée à la cathode est de − 900 V, pendant une durée de 30 secondes. Pour déposer la seconde couche, on utilise une tension de cathode de − 2 020 V, pendant une durée de 28 secondes et, enfin, pour la troisième couche, une tension de − 2 650 V est appliquée pendant 83 secondes.

La figure 10 donne les caractéristiques optiques du verre revêtu de cette triple couche. Les domaines d'utilisation de ce vitrage seront assez voisins de ceux de l'exemple précédent, bien que la structure de l'empilement soit différente.

**Revendications**

1. Vitrage à spectres de transmission et de réflexion sélectifs, comprenant un substrat transparent revêtu d'au moins une couche mince semi-réfléchissante d'un métal ou d'un alliage, elle-même revêtue d'une couche mince transparente constituée d'oxydes métalliques, ce vitrage étant caractérisé en ce que ladite couche d'oxydes métalliques est constituée d'un oxyde mixte de cadmium et d'étain, dans lequel le rapport atomique Cd/Sn est compris entre 0,2 et 10, ladite couche présentant une épaisseur inférieure à 0,06 μm.

2. Vitrage selon la revendication 1, caractérisé en ce que le rapport atomique Cd/Sn de l'oxyde mixte de cadmium et d'étain est compris entre 1 et 3.

3. Vitrage selon l'une des revendications 1 et 2, caractérisé en ce que la couche superficielle d'un oxyde mixte de cadmium et d'étain a une épaisseur comprise entre 0,01 μm (100 Å) et 0,06 μm (600 Å).

4. Vitrage selon l'une des revendications 1 à 3, caractérisé en ce que la couche semi-réfléchissante a une épaisseur comprise entre 0,005 μm (50 Å) et 0,03 μm (300 Å).

5. Vitrage selon l'une des revendications 1 à 4, caractérisé en ce que la couche semi-réfléchissante est en contact direct avec le substrat transparent.

6. Vitrage selon l'une des revendications 1 à 4, caractérisé en ce que la couche semi-réfléchissante est portée par une couche d'ancrage.

7. Vitrage selon la revendication 6, caractérisé en ce que la couche d'ancrage est constituée par un oxyde mixte de cadmium et d'étain.

8. Vitrage selon la revendication 7, caractérisé en ce que l'oxyde mixte de cadmium et d'étain de la couche d'ancrage est le même que celui dont est constituée la couche superficielle.

9. Vitrage selon l'une des revendications 6 et 7, caractérisé en ce que la couche d'ancrage en oxyde mixte de cadmium et d'étain a une épaisseur comprise entre 0,001 μm (10 Å) et 0,05 μm (500 Å).

**Claims**

1. A pane having selective transmission and reflection spectra, comprising a transparent substrate coated with at least one thin semi-reflecting layer of a metal or an alloy, itself coated with a thin transparent layer formed of metal oxides, the pane being characterised in that said layer of metal oxides comprises a mixed oxide of cadmium and tin, in which the Cd/Sn atomic ratio is from 0.2 to 10, said layer having a thickness less than 0.06 μm.

2. A pane according to claim 1, characterised in that the Cd/Sn atomic ratio of the mixed oxide of cadmium and tin is from 1 to 3.

3. A pane according to one of claims 1 and 2, characterised in that the surface layer of the mixed oxide of cadmium and tin has a thickness from 0.01 µm (100 Å) and 0.06 µm (600 Å).

4. A pane according to one of claims 1 to 3, characterised in that the semi-reflecting layer has a thickness from 0.005 µm (50 Å) to 0.03 µm (300 Å).

5. A pane according to one of claims 1 to 4, characterised in that the semi-reflecting layer is in direct contact with the transparent substrate.

6. A pane according to one of claims 1 to 4, characterised in that the semi-reflecting layer is carried by an anchoring layer.

7. A pane according to claim 6, characterised in that the anchoring layer comprises a mixed oxide of cadmium and tin.

8. A pane according to claim 7, characterised in that the mixed oxide of cadmium and tin of the anchoring layer is the same as that of which the surface layer is comprised.

9. A pane according to one of claims 6 to 7, characterised in that the anchoring layer of mixed oxide of cadmium and tin has a thickness from 0.001 µm (10 Å) to 0.05 µm (500 Å).

## Ansprüche

1. Verglasung mit selektiven Durchlässigkeits- und Reflektionsspektren, bestehend aus einen transparenten Träger, der mit wenigstens einer dünnen halbreflektierenden Metall- oder Legierungsschicht beschichtet ist, die ihrerseits mit einer dünnen transparenten, aus Metalloxiden bestehenden Schicht abgedeckt ist, dadurch gekennzeichnet, daß die Metalloxidschicht aus einem Mischoxid von Kadmium und Zinn mit einem Atomverhältnis Cd/Sn zwischen 0,2 und 10 besteht und eine Dicke unter 0,06 µm aufweist.

2. Verglasung nach Anspruch 1, dadurch gekennzeichnet, daß das Atomverhältnis Cd/Sn des Mischoxids von Kadmium und Zinn zwischen 1 und 3 liegt.

3. Verglasung nach einem der Ansprüche 1 und 2, dadurch gekennzeichnet, daß die Oberflächenschicht aus einem Mischoxid von Kadmium und Zinn eine Dicke zwischen 0,01 µm (100 Å) und 0,06 µm (600 Å) aufweist.

4. Verglasung nach einem der Ansprüche 1 bis 3, dadurch gekennzeichnet, daß die halbreflektierende Schicht eine Dicke zwischen 0,005 µm (50 Å) und 0,03 µm (300 Å) aufweist.

5. Verglasung nach einem der Ansprüche 1 bis 4, dadurch gekennzeichnet, daß die halbreflektierende Schicht in unmittelbarem Kontakt mit dem transparenten Träger steht.

6. Verglasung nach einem der Ansprüche 1 bis 4, dadurch gekennzeichnet, daß die halbreflektierende Schicht von einer Haftschicht getragen ist.

7. Verglasung nach Anspruch 6, dadurch gekennzeichnet, daß die Haftschicht aus einem Mischoxid von Kadmium und Zinn besteht.

8. Verglasung nach Anspruch 7, dadurch gekennzeichnet, daß das Mischoxid aus Kadmium und Zinn der Haftschicht das gleiche wie das ist, aus dem die Abdeckschicht besteht.

9. Verglasung nach einem der Ansprüche 6 und 7, dadurch gekennzeichnet, daß die Haftschicht aus dem Mischoxid von Kadmium und Zinn eine Dicke zwischen 0,001 µm (10 Å) und 0,05 µm (500 Å) aufweist.

FIG.1

FIG.2

FIG. 3

FIG. 4

0 037 335

FIG.5

FIG.6

FIG.7

FIG.8

0 037 335

FIG.9

FIG.10

0 037 335